Europäisches Patentamt

European Patent Office

Office européen des brevets

(11) Publication number: **0 290 401**
**A2**

## (12) EUROPEAN PATENT APPLICATION

(21) Application number: **88830150.4**

(22) Date of filing: **07.04.88**

(51) Int. Cl.⁴: **B 29 C 51/26**
B 29 C 51/42, B 29 C 51/44,
B 29 C 51/18

(30) Priority: **08.04.87 IT 6728987**

(43) Date of publication of application:
**09.11.88 Bulletin 88/45**

(84) Designated Contracting States:
**AT BE CH DE ES FR GB GR IT LI LU NL SE**

(71) Applicant: **O.M.G. di FRETTA SEVERINO & C. S.n.c.**
**Via Torino, 78**
**I-10040 Givoletto (Torino)  (IT)**

(72) Inventor: **Fretta, Severino O.M.G.di Fretta Severino & C.**
**Snc**
**Via Torino 78**
**I-10040 Givoletto (Torino)  (IT)**

(74) Representative: **Buzzi, Franco et al**
**c/o Jacobacci-Casetta & Perani S.p.A. Via Alfieri, 17**
**I-10121 Torino  (IT)**

(54) **Thermo-forming machine.**

(57) A machine for thermoforming a continuous strip (N) or sheets of plastics material in an automatic cycle has moulding equipment supported by an auxiliary structure (34), which is articulated to the main structure of the machine about a vertical axis (X-X) in order to ensure easier replacement of the dies. The machine also has an auxiliary system (28) for heating the edges of the strip (N) and a system for controlling the advance of the strip (N) in steps by means of photoelectric cells.

FIG. 1

EP 0 290 401 A2

## Description

### A thermoforming machine

The present invention relates to an automatic thermoforming machine comprising a main support structure, means for the stepwise conveyance of a sheet of plastics material, means for heating the sheet, a vacuum moulding device situated downstream of the heating means in the direction of advance of the sheet and means for separating the thermoformed items from the sheet.

Machines of the said type carry out the thermoforming process in fully automated cycles, ensuring a high production rate. These machines have the disadvantage of requiring considerable amounts of time for the replacement of the moulds with a consequent, considerable reduction in the productivity of the machine.

The object of the present invention is to provide a machine of the type specified at the beginning of the description which does not have the above disadvantages and which is simple and economical to produce.

According to the invention, this object is achieved by virtue of the fact that the moulding device is supported by an auxiliary structure which is articulated to the main structure about a substantially vertical axis situated laterally of the path of advance of the sheet.

By virtue of this characteristic, the operation of replacing the thermoforming die is extremely quick and easy since it is not necessary to operate in the restricted spaces between the lateral guides which support the edges of the sheet and the guide columns of the die, but it is possible to operate in a large working area after the auxiliary structure has been pivoted to the side of the machine. It is thus possible to replace the dies and related equipment with the use, for example, of convenient transporting trolleys, without the need for hoists or special equipment.

According to another characteristic of the invention, in a thermoforming machine in which the means for conveying the sheet comprise a pair of parallel, endless longitudinal chains provided with teeth adapted to pierce the side edges of the sheet to move it forward, the main structure of the machine supports auxiliary heating means for heating the side edges of the sheet locally before their engagement by the teeth.

Thus it is possible to supply the machine with sheets even of a considerable thickness (greater than 2mm), while avoiding the risk of cutting or splitting the sheet when the teeth engage its edges. These splits can, in fact, create considerable problems during the heating and thermoforming of the sheet.

The machines to which the present invention relates have a central control unit for organising the sequencing and coordination of the various operations. Preferably, in the machine according to the invention, the means for separating the thermoformed items from the sheet have associated sensors for sending signals to the central unit, which are indicative of the exact position of the sheet relative to the support structure.

By virtue of this further characteristic, the positioning of the thermoformed items, for example at the die for blanking the edges of the items or at the station for stacking the items, can be achieved with considerable precision regardless of any tolerances in the stepwise conveyor means, thus ensuring production with a small percentage of waste items.

Further characteristics and advantages of the machine according to the invention will become clear from the following detailed description, provided purely by way of non-limiting example with reference to the appended drawings, in which:

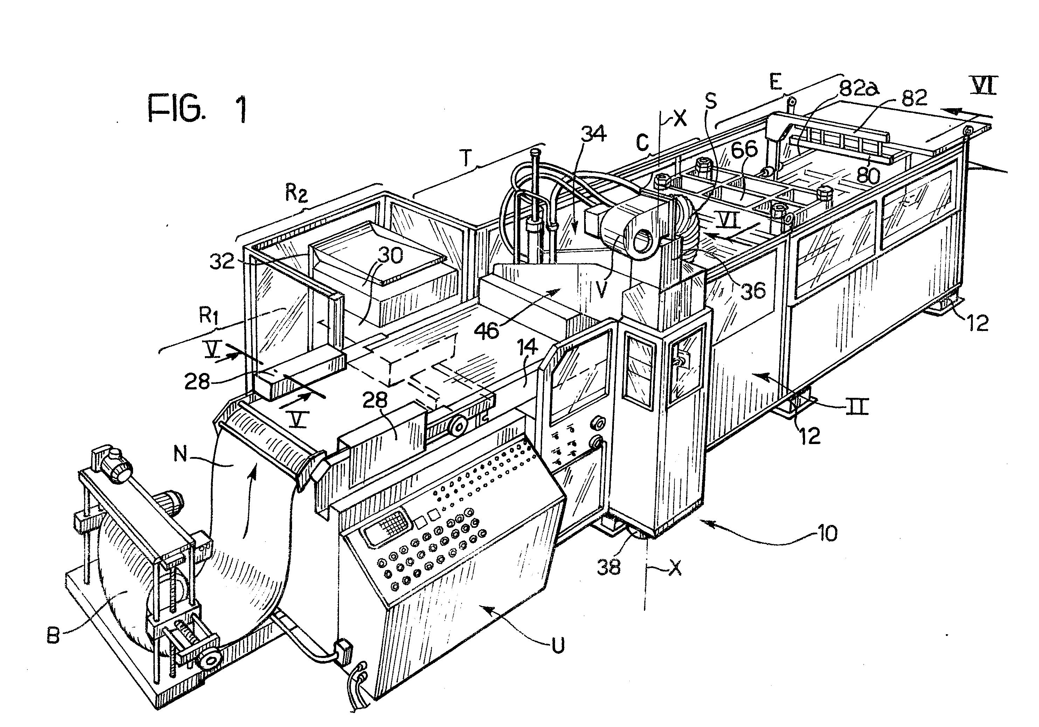

Figure 1 is a perspective view of a machine according to the invention,

Figure 2 is a detail of Figure 1,

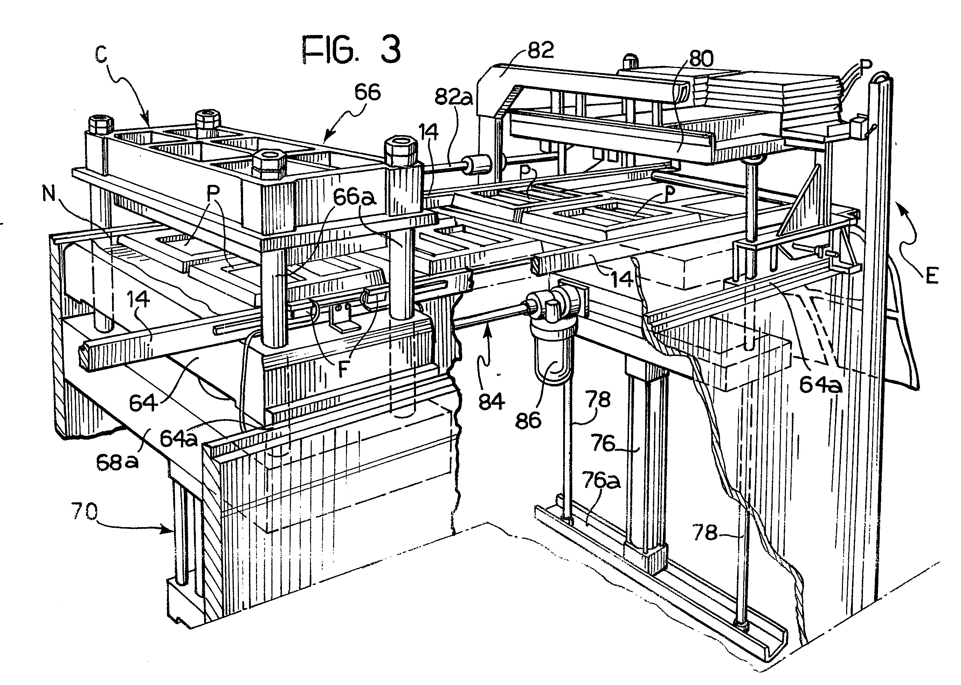

Figure 3 is another detail of Figure 1,

Figure 4 is a partially-sectioned view taken on the arrow IV of Figure 2,

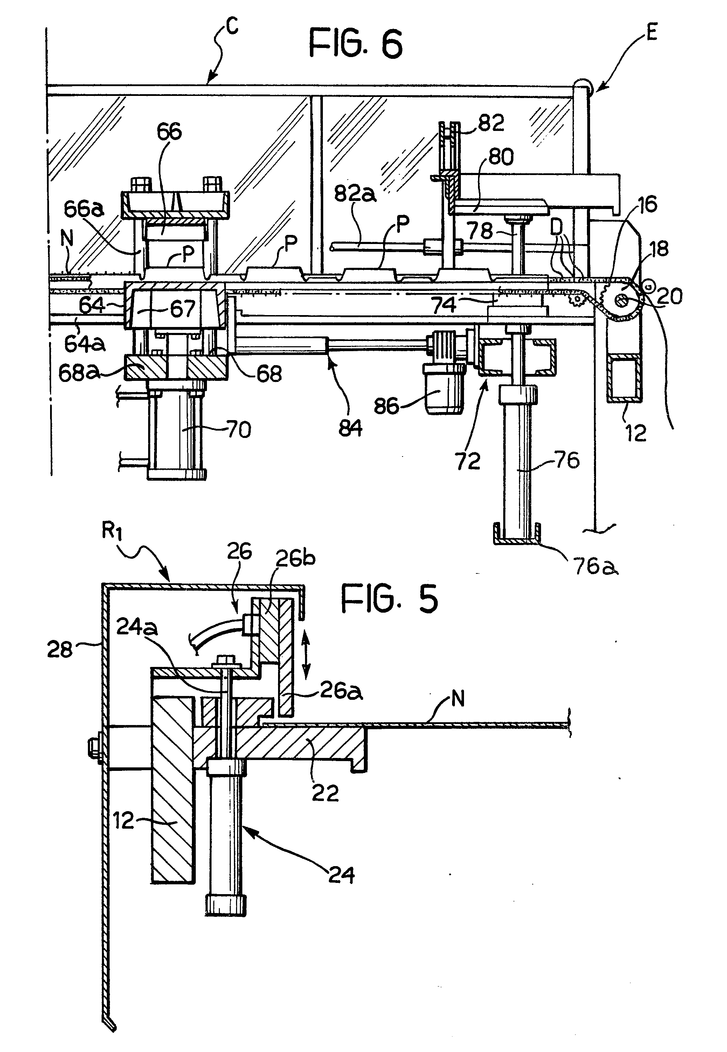

Figure 5 is a section taken on the line V-V of Figure 1, and

Figure 6 is a section taken on the line VI-VI of Figure 1.

With reference to the drawings, a machine for the continuous thermoforming of a strip N of plastics material wound on a reel B is generally indicated 10. The machine 10 has a support structure 12 constituted, for example, by welded metal profile sections on which two longitudinal guides are mounted parallel to each other and associated, in known manner, with stepwise, endless conveyor chains 16 which pass around gears 18 keyed on to a drive shaft 20 and around idle gears (not illustrated). Each link of each chain 16 has a tooth D for perforating an edge of the strip N to effect its advance.

The machine 10 has a station $R_1$ for preheating the edges of the strip, a station $R_2$ for heating the strip, a station T for vacuum thermoforming, a blanking station C for cutting around the outlines of the thermoformed items P and a removal and stacking station E for the items P.

At the preheating station $R_1$, the machine 10 has a pair of parallel, horizontal guides 22 fixed to the structure 12 of the machine and on which the lateral edges of the strip N slide before being engaged by the teeth D of the chains 16. The guides 22 each support two pneumatic cylinders 24 whose rods 24a are fixed to a heating element 26 having bars 26a provided with internal, protected resistances (not illustrated) which are fixed to the elements 26 with the interposition of insulating washers 26b. The heating elements 26 and the pneumatic cylinders 24 are protected by L-shaped metal sheets 28.

At the heating station $R_2$, the machine 10 has a pair of heating plates 30 which face each other and are supported by a structure 32 mounted for sliding movement transverse the direction of advance of the strip N, so as to be able to dispose the plates 30 over and under the strip N respectively.

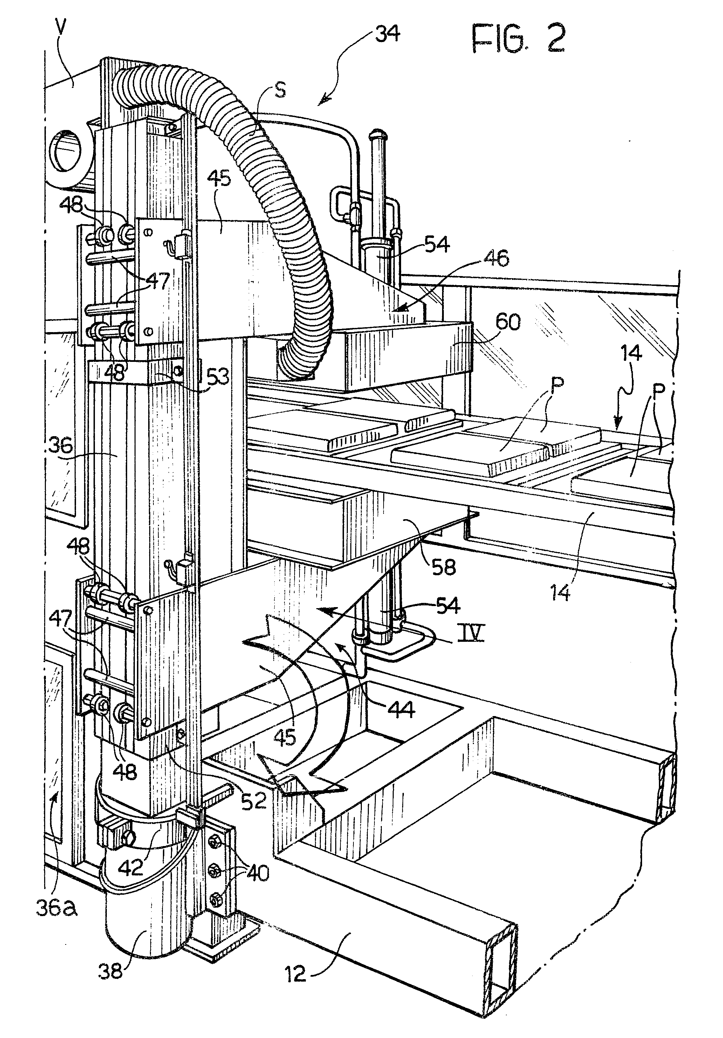

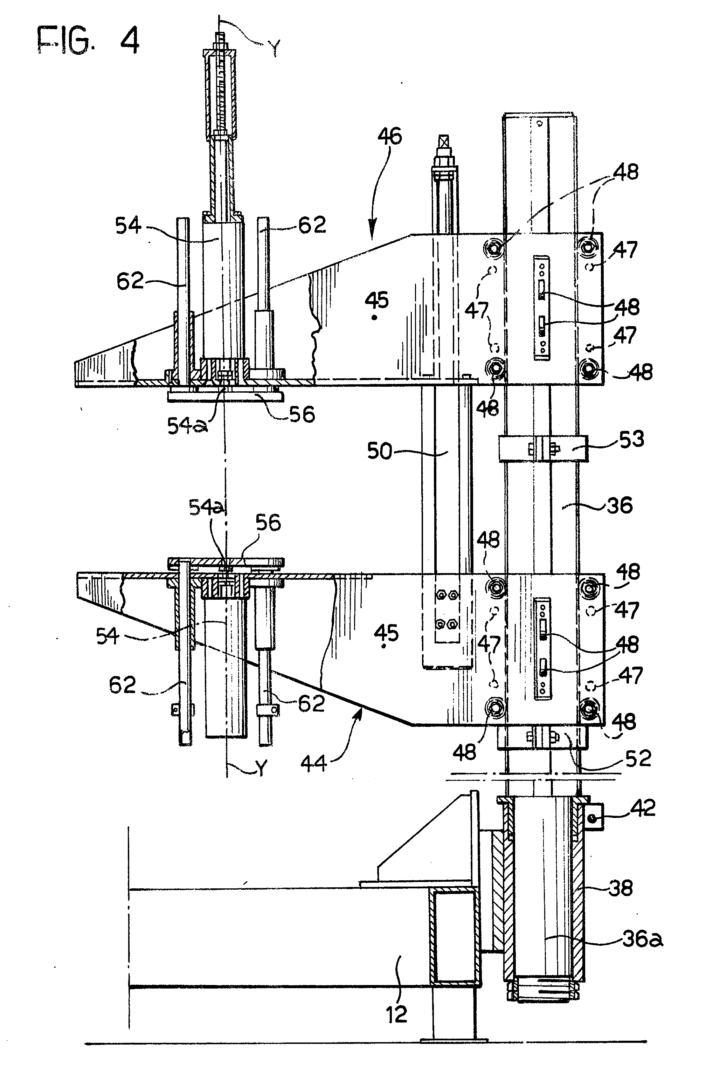

In the thermoforming zone T, an auxiliary structure generally indicated 34 is cantilevered on the structure 12 of the machine and articulated about a vertical axis X-X. The auxiliary structure 34 comprises a rectangular-sectioned upright 36 having a lower end 36a of circular section which is rotatably supported by a support and articulation socket 38 fixed at 40 to the main structure 12 of the machine. A fixing ring 42, whose function will be clarified in the description below, is mounted in correspondence with the portion 36a of the upright 36, coaxial with the latter. A lower arm 44 and an upper arm 46 are mounted for vertical sliding movement on the upright 36. Each of these arms is composed of two identically shaped plates 45 which face each other and are joined by cylindrical bars 47. Each arm also has rollers 48 for enabling the arms 45 and 46 to slide relative to the upright 36; the positions of the rollers 48 relative to the upright 36 can be adjusted to allow for any play in operation. A fluid actuator 50, whose operating stroke can be regulated in dependence on the conditions of use, is interposed between the arms 44 and 46. An actuator of this type is described in the Applicant's Italian patent No. 1118907 to which reference is made herein. When the actuator 50 is in the rest configuration, the lower arm 44 is supported by a flange 52 fixed to the upright 36. A similar stop flange 53 is fixed to the upright 36 below the upper arm 46. As can clearly be seen in Figure 4, pressurised fluid actuators 54 with adjustable-strokes are mounted at the free ends of the arms 44 and 46 and arranged along a vertical axis Y-Y, their rods 64a being fixed to plates 56 on which die-carrying members and other moulding equipment are intended to be mounted in positions dependent on the type of process adopted for the thermoforming. In the configuration illustrated in Figure 2, which relates to a positive-die vacuum-thermoforming process with pre-drawing blowing, the lower arm 44 supports a so-called box 58 and a positive die (not illustrated) fixed to the respective plate 56. Similarly, the upper arm 46 supports a fixing frame 60 for the strip which is adapted to form a seal with the box 58. Tubes 62 lead to the plates 56 in known manner and are connected to a pressure source and a vacuum source.

In the blanking zone C, the structure 12 of the machine 10 supports a matrix 64 which corresponds to a blanking die 66 fixed firmly to vertical columns 66a slidably mounted in corresponding bushes 67 and fixed at 68 to a plate 68a driven by a pressurised-fluid actuator 70. The matrix 64 is slidable horizontally on guides 64a so that its position can be adjusted (by a motor-driven male and female screw system not illustrated), relative to the thermoforming zone T. In correspondence with the blanking die 66, one of the guides 14 for the strip N supports a pair of photoelectric cells F for identifying the exact position of the items P below the blanking die 66 and sending signals to a central electronic control unit U with which the machine is provided. The photoelectric cells F are positioned in the plane of the strip N so as to intercept a front edge and a rear edge of the thermoformed items P in the blanking zone C.

In the removal and stacking zone E for the items P, the structure 12 of the machine slidably supports a removal device 72 comprising removal punches 74 driven so as to reciprocate vertically by a pneumatic cylinder 76. Simultaneously with the upward movement of the punch 74, by means of a beam 76a and two rods 78, the pneumatic cylinder 76 drives the downward movement of a frame 80 on which the items P are deposited, and from which they are removed periodically by means of a transverse arm 82 which is slidable horizontally on the guide bar 82a in the direction of advance of the strip N. The device 72 is connected to the matrix 64 by means of a male and female thread system 84, with the interposition of a geared motor 86 for operating the male-female thread system 84.

Before starting the machine 10, the operator sets the various operating parameters such as, for example, the width of the strip N (and consequently the distance between the guides 14) and the average length of each step by which the strip N advances (and the automatic positioning of the blanking die 66 relative to the thermoforming die), by means of the central control unit U. During operation, in the zone $R_1$ of the machine, the lateral edges of the strip N come into contact with the heating bars 26a which are urged against the guides 22 by the actuators 24. In this way the temperature reached by the edges of the strip is such as appreciably to facilitate the piercing of the edges by the teeth D associated with the chains 16. After passing between the radiant panels 30, the heated strip N advances stepwise between the arms 44 and 46. In synchronism with the other operations of the machine, the actuator 50 initially causes the upper arm 45 to move downwards until it abuts the stop flange 53; in this situation, the lower arm 44 moves away from the fixing flange 52 against which it was bearing so that the strip N is gripped between the box 58 and the corresponding frame 60. Thermoforming is then carried out, compressed air first being passed through the tubes 62 associated with the lower arm 44, followed immediately thereafter by the connection of the tubes to the vacuum source to make the sheet stick to the die which in the meantime has been raised by means of its fluid actuator 54. During this phase, as well as being cooled by the cooling of the die, the sheet is cooled by the blowing of air into the thermoforming zone by means of a blower V connected to a flexible tube S. Upon completion of the thermoforming, the actuator 50 moves the arms 44 and 46 apart.

The strip N then advances towards the blanking zone C and its advance is checked by the photocells F so that the item or items P are positioned exactly beneath the blanking die 66. In other words, the photocells F, through the central control unit U, pilot the actuator means, which are normally pneumatic, which drive the stepwise advance of the strip N. The blanking die 66 does not detach the items P completely from the sheet N but leaves them attached by small connecting regions so as to enable them to be transferred simultaneously to the subsequent removal - stacking zone E. In the latter zone, the device 72 , whose position relative to the blanking zone C is adjusted by means of the geared motor 86 associated with the male and female thread system 84, separates the items P from the strip N with a punch 74 and simultaneously deposits them on the frame 80 from which the stacked items are periodically removed by the arm 82.

When it is necessary to replace the die, after stopping the machine 10 the operator slackens the fixing ring 42 and, manually or by means of a motor, rotates the auxiliary structure 34 in the support and articulation socket 38 in the sense indicated by the arrow in Figure 2.

The machine according to the invention may be used not only for thermoforming strips but also for thermoforming sheets of considerable thickness supplied automatically to the machine.

## Claims

1. An automatic thermoforming machine comprising a main support structure, means for the stepwise conveyance of a sheet of plastics material, means for heating the sheet, a vacuum moulding device situated downstream of the heating means in the direction of advance of the sheet and means for separating the thermoformed items from the sheet, characterised in that the moulding device (56, 54, 56, 62, 68, 60) is supported by an auxiliary structure (34) articulated to the main structure (12) about a substantially vertical axis (X-X) situated laterally of the path of advance of the sheet (N).

2. A machine according to Claim 1 in which the means for conveying the sheet comprise a pair of parallel, endless, longitudinal chains provided with teeth for engaging the lateral edges of the sheet to move it forwards, characterised in that the main structure (12) of the machine (10) supports auxiliary heating means (26a) for heating the lateral edges of the sheet (N) locally before their engagement by the teeth (D).

3. A machine according to Claim 1, in which the sequencing and coordination of the various operations are entrusted to a central control unit, characterised in that sensors (F) are associated with the means (E) for separating of the thermoformed items (P) from the sheet (N) and are arranged to supply the central unit (U) with signals indicative of the exact position of the sheet (N) relative to the structure (12).

4. A machine according to Claim 1, characterised in that the auxiliary structure (34) comprises a vertical pillar (36) on which a pair of parallel arms (44, 46) are slidably mounted for supporting the die-carrying members (56), boxes (58) and frames (60) for gripping the sheet (N), a pressurised fluid actuator (50) being interposed between the arms for moving them towards each other.

5. A machine according to Claim 2, characterised in that the auxiliary heating means comprise a pair of heated bars (26a) urged by actuator means (24) into contact with the lateral edges of the sheet (N) which are supported by guides (22) fixed to the structure (12) of the machine (10).

6. A machine according to Claim 3, in which the means for separating the thermoformed items comprise a blanking station for cutting the sheet around the outlines of the items, characterised in that it has first and second photoelectric cells (F) situated laterally and substantially in the plane of the sheet (N) so as to intercept a front edge and a rear edge of the thermoformed items (P) situated in the blanking zone (C).

# FIG. 1

029040i

0290401

FIG. 2

FIG. 3

FIG. 4

0290401

**FIG. 6**

**FIG. 5**